# EUROPEAN PATENT APPLICATION

(11) **EP 0 532 245 A1**
(43) Date of publication of application: **17.03.1993**
(21) Application number: 92308082.4
(22) Date of filing: 07.09.1992
(51) Int. Cl.: B62H 5/14, B62H 5/00, B62J 11/00

(54) **Improvements in or relating to locks**

(30) Priority: 07.09.1991 GB 9119179
(71) Applicant: CYCLOX LIMITED, Aldridge, Walsall, West Midlands WS9 8EL (GB)
(72) Inventor: Thomas, Alan Ernest, c/o Cyclox Limited, Aldridge, Walsall, West Midlands WS9 8EL (GB)
(74) Representative: Swindell & Pearson

(57) **Abstract**

A locking device 10 comprises U-shaped members 12, 14 which have parallel arms 16, 18, 26, 28 connected by curved intermediate portions 17, 27. A bore 20 through the first member 12 can receive the arms 26, 28 with a sliding fit. A lock 32 can operate to prevent further sliding. A wire cable 38 with annular rings 40, 42 at either end, allows the device 10 to be locked to another article, when the arms of the device 10 are received in the rings 40, 42 and the cable 38 passes around the other article.

## Description

This invention relates to locks and in particular but not exclusively to locking devices for bicycles.

Bicycles may be locked to immovable objects such as lamp posts, by the use of metal chains or cables. Alternatively, some manufacturers produce locks which can be fitted around one wheel of the bicycle and part of the frame. These disable the bicycle, but do not prevent the other wheel being stolen, or the whole bicycle being stolen.

It is an object of this invention to obviate or mitigate the above mentioned disadvantages.

According to the present invention, there is provided a locking device comprising first and second substantially U-shaped members, each U-shaped member comprising two elongate arms, and the arms of the first U-shaped member are adapted to cooperate with the arms of the second U-shaped member to form a substantially closed collar, the device being so adapted and arranged as to allow locking means to lock the first and second U-shaped members to each other.

Preferably the device comprises integral locking means. The arms of each member may be substantially parallel. The collar may comprise parallel sides and curved ends.

The cooperation of the U-shaped members is preferably by means of one or more bores extending longitudinally through an arm of one of the U-shaped members and adapted to receive an arm of the other U-shaped member.

The locking means may be provided with a plunger carried by one of the U-shaped members and one of the arms of the other U-shaped member may be provided with a plurality of apertures or depressions adapted to receive the plunger to lock the first and second U-shaped members together.

A lock extending member may be provided to extend the lock so that it can be locked to another article. For example, when the lock is being used to secure together the front and rear wheels of a bicycle, the lock extending member can be used to lock the lock to a lamp post.

Preferably, the lock extending member comprises a length of a flexible material. This may be attached at each end thereof to an annulus. Each annulus is preferably adapted to receive one of the arms of the first or second U-shaped member. A protective sleeve, for instance of a plastics material, may be provided around the flexible material.

Preferably the flexible material is a wound wire cable, for instance of iron or steel.

There may be provided attachment means for use in attaching the device to a member when not in use. The attachment means may comprise a strap for placement around the device or part of the device and around the said member. The attachment means may comprise a spacer member which, in use, is located between the device and the said member to maintain a spaced apart relationship therebetween.

One embodiment of the invention will now be described in more detail, by way of example only, and with reference to the accompanying drawings in which:-
Fig. 1 is schematic side view of a locking device according to the invention, together with the accompanying extending means;
Fig. 2 is a view along the lines II-II in Fig. 1;
Fig. 3 is a side view of the locking device shown in Fig. 1 with a first U-shaped member locked to the second U-shaped member;
Fig. 4 is a schematic side view of a bicycle having the front and rear wheels locked together by a locking device according to the invention;
Fig. 5 is a side view of the locking device shown in figs. 1 and 3 with the second U-shaped member fully received by the first U-shaped member; and
Fig. 6 is a partial vertical section showing a locking device stowed when not in use.

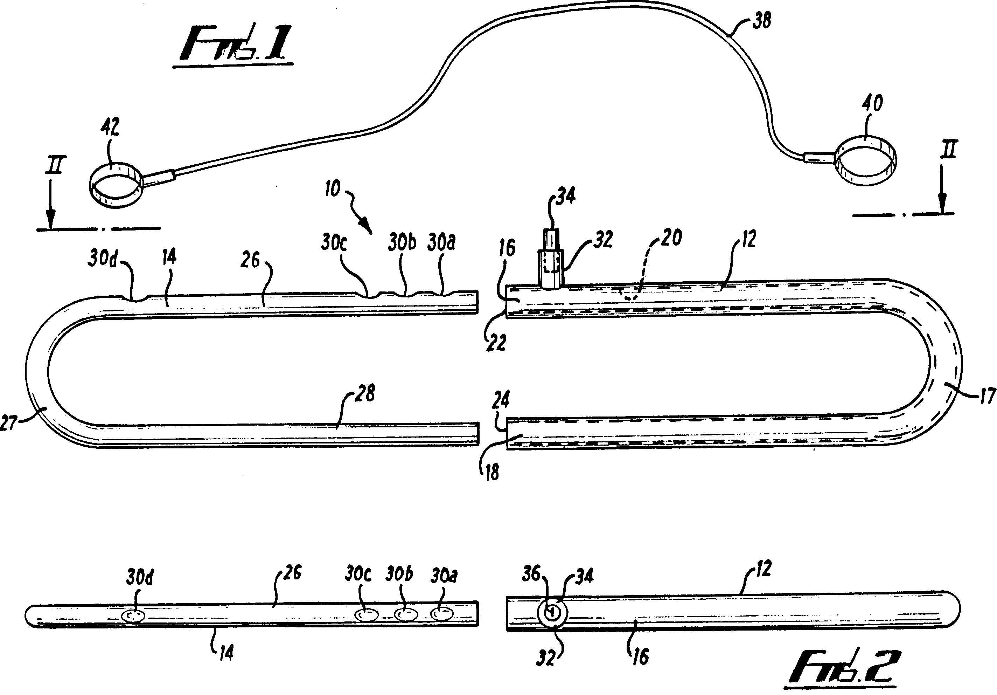

Referring to the drawings, Fig. 1 shows a locking device generally designated 10 which comprises a first U-shaped member 12 and a second U-shaped member 14. The first U-shaped member 12 has parallel arms 16, 18 which are of cylindrical cross-section, and connected by a curved intermediate portion 17. A bore 20 extends through the first U-shaped member 12 from the end 22 of the arm 16 to the end 24 of the arm 18.

The second U-shaped member 14 has parallel arms 26, 28 which are also of a cylindrical cross-section, and are connected by a curved intermediate portion 27. The outer diameters of the arms 26, 28 are slightly less than the diameter of the bore 20. This enables the arms 26, 28 to be received with a sliding fit within the arms 16, 18. The member 14 may be hollowed by a bore, or may be solid.

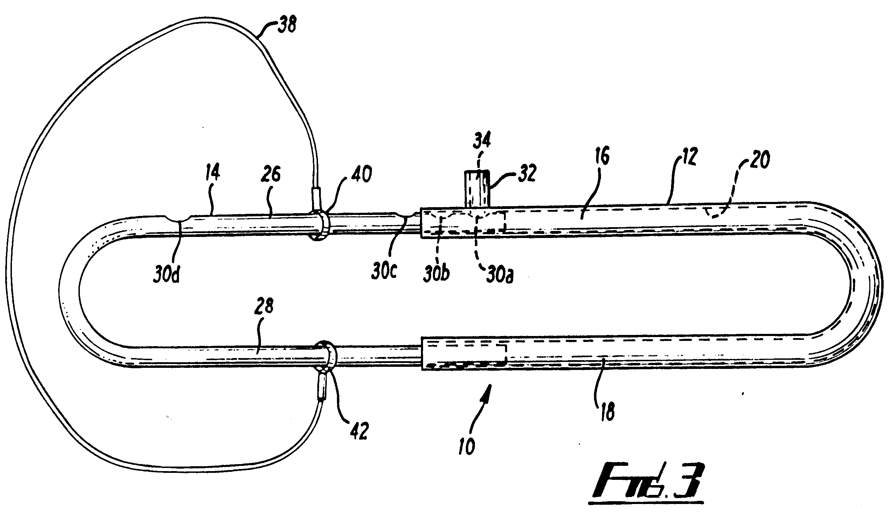

The arm 26 of the second U-shaped member 14 is provided with apertures or depressions 30a,b,c and 30d, (see Fig. 2). It will be convenient to provide apertures through the wall of the arm 26 if the arm is hollow, and depressions if the arm is solid. The following description refers only to apertures, in the interests of brevity, and without intending to suggest that the alternative depressions cannot be used. The apertures 30a,b,c are relatively close to the free end of the arm 26. The aperture 30d is close to the curved portion 27. The arm 16 of the first U-shaped member 12 is provided with locking means 32 (conventional in itself) comprising a lockable plunger 34. The plunger 34 is shown in the unlocked position in Fig. 1. The plunger 34 has a key hole 36 for receiving a key to unlock it. The plunger 34 can be advanced into the bore 20 by manually depressing the exposed end, and will then be locked in that position until released by a key.

Fig. 1 also shows an extending member in the form of a length of wound wire cable 38. At each end of the cable 38 there is a metal ring 40, 42. The rings can be placed over the arms of the U-shaped members 12, 14. The cable 38, is provided with a sleeve made from a plastics material to avoid it causing damage, for example to the paintwork of a bicycle. The purpose of the cable 38 will be described below.

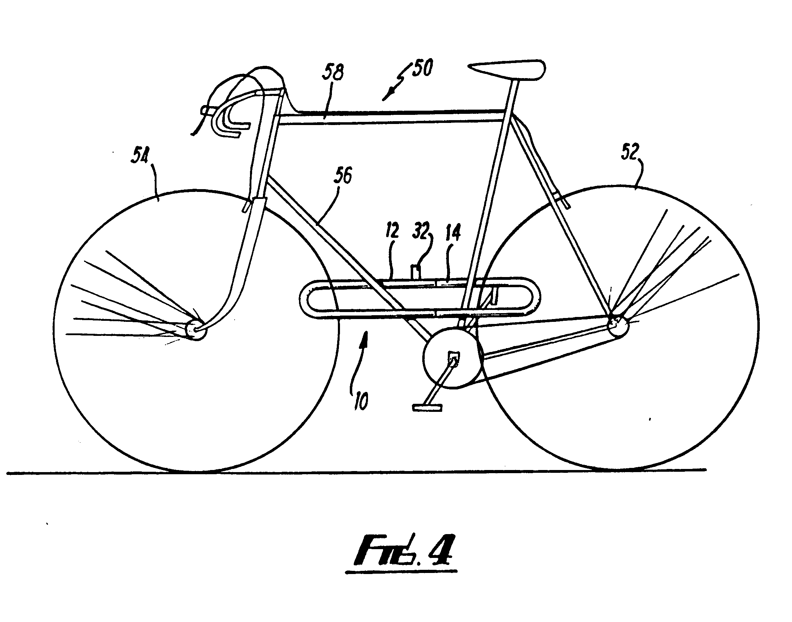

Fig. 3 shows the locking device 10 in the locked condition. The second U-shaped member 14 is locked to the first U-shaped member 12. In this respect, it can be seen that the arms 26, 28 of the U-shaped member 14 have been introduced into the bore 20 in the arms 16, 18. The arms 26, 28 are then moved longitudinally relative to the bore, until one of the apertures 30a,b, c, is in register with the plunger 34. In Fig. 3 the aperture 30a is shown in register with the plunger 34. But it will be appreciated that any of the other apertures can be so arranged.

The plunger 34 is then depressed into the bore 20 and thus into the selected aperture 30a,b or c. Complete depression of the plunger results in it locking in the locked position as shown in Fig. 3, thus locking the two U-shaped members 12, 14 together, because the two members cannot thereafter slide relative to each other. Fig. 3 also shows the cable 38 with the rings 40, 42 arranged over the arms 26, 28 of the second U-shaped member 14.

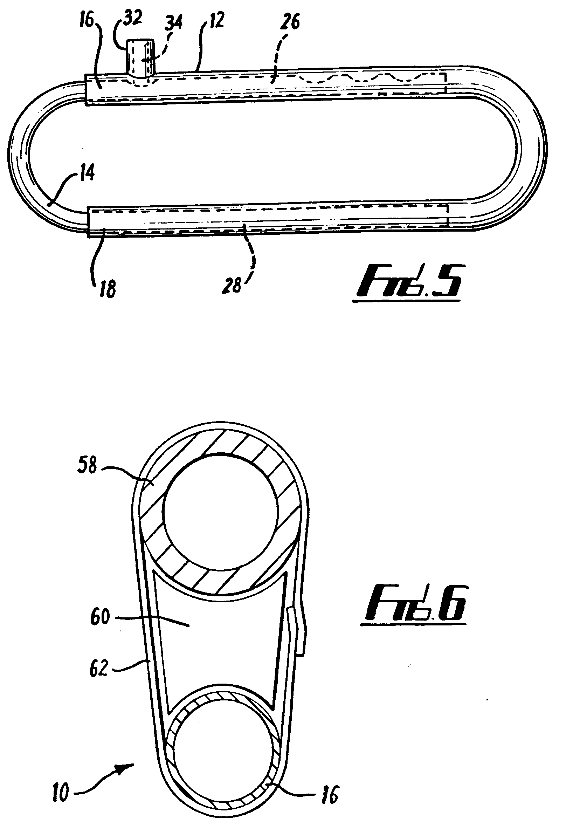

In order to lock a bicycle 50 (Fig. 4) using the locking device 10, one of the U-shaped members 12, 14 is first passed around the rear wheel 52 and the other of the U-shaped members 12,14 is passed around the front wheel 54. The two U-shaped members are then locked together as described above in relation to Fig. 3. The resulting arrangement is shown in Fig. 4, from which it can be seen that both wheels 52, 54 are locked together by the device 10 which forms a collar around them. Moreover, the collar formed by the arms of the U-shaped members passes to either side of the frame 56 of the bicycle 50, to lock the wheels to the frame. If desired, the cable 38 (not shown in Fig. 4) can be used to secure the bicycle to a fixed object, for example a lamp post. This is done by first passing the cable 38 around the lamp post and then passing the rings 40, 42 over the arms 26, 28 of the second U-shaped member 14 before the members 14, 16 are brought together. The second U-shaped member 14 can then be locked to the first U-shaped member as shown in Fig. 3.

In order to carry the lock while riding the bicycle, the arms 26, 28 of the second U-shaped member 14 can be inserted fully into the arms 16, 18 of the first U-shaped member 12. In this position, the aperture 30 lies in register with the plunger 34 of the lock 32. The plunger 34 can then be depressed to lock the second U-shaped member 14 to the first U-shaped member 12 in a secure but compact arrangement, as shown in Fig. 4. The locking device can then be conveniently carried either by a suitable carrier on the frame or in, for example, a saddle bag.

One arrangement for stowing the device 10 is illustrated in Fig. 6. The device 10 is hung below the cross-bar 58 of the bicycle 50 by means of a spacer block 60 and a strap 62. The block 60 has concavities to complement the cross-bar 58 and the U-shaped member 16 of the device, so that the device is spaced a little below the cross-bar 58. The arrangement is secured by the strap 62 which forms a loop around the member 16, block 60 and cross-bar 58. The loop may be closed by any convenient fixing, including hook and pile fastening, of the type sold under the trade mark VELCRO.

Various modifications could be made to the above described embodiment without departing from the invention. For example, a larger or smaller number of apertures could be provided in the arm 26 of the second U-shaped member 14 to alter the number of positions in which the second U-shaped member 14 can be locked. Also, the U-shaped member may be of any U-shape, including a design in which the portions connecting the arms 16, 18 or the arms 26, 28 are straight instead of curved. The plunger 34 could be replaced by other suitable locking means, with consequent modification of the members 12, 14. The locking means could be a removable locking means such as a padlock.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A locking device, characterised in that the device (10) comprises first and second substantially U-shaped members (12, 14), each U-shaped member (12, 14) comprising two elongate arms (16, 18, 26, 28), and the arms (16, 18) of the first U-shaped member (12) are adapted to cooperate with the arms (26, 28) of the second U-shaped member (14) to form a substantially closed collar, the device (10) being so adapted and arranged as to allow locking means (32) to lock the first and second U-shaped members (12, 14) to each other.

2. A device according to claim 1, characterised in that the device (10) comprises integral locking means (32).

3. A device according to claim 1 or 2, characterised in that the arms (16, 18, 26, 28) of each member (12, 14) are substantially parallel.

4. A device according to any preceding claim, characterised in that the collar comprises parallel sides (16, 18, 26, 28) and curved ends (17, 27).

5. A device according to any preceding claim, characterised in that the cooperation of the U-shaped members (12, 14) is by means of one or more bores extending longitudinally through an arm (16, 18) of one of the U-shaped members (12) and adapted to receive an arm (26, 28) of the other U-shaped member (14).

6. A device according to any preceding claim, characterised in that the locking means (32) comprises a plunger (34) carried by one of the U-shaped members (12) and one of the arms (26) of the other U-shaped member (14) is provided with a plurality of apertures (30a, 30b, 30c, 30d) or depressions adapted to receive the plunger (34) to lock the first and second U-shaped members (12, 14) together.

7. A device according to any preceding claim, characterised in that the device (10) further comprises a lock extending member (38) to extend the device (10) so that it can be locked to another article.

8. A device according to claim 7, characterised in that when the device (10) is being used to secure together the front and rear wheels of a bicycle (50), the lock extending member (38) can be used to lock the device (10) to a lamp post.

9. A device according to claim 7 or 8, characterised in that the lock extending member (38) comprises a length of a flexible material.

10. A device according to any of claims 7 to 9, characterised in that the lock extending member (38) is attached at each end thereof to an annulus (40. 42).

11. A device according to claim 10, characterised in that each annulus (40, 42) is adapted to receive one of the arms (16, 18, 26, 28) of the first or second U-shaped member (12, 14).

12. A device according to any of claims 7 to 11, characterised in that a protective sleeve is provided around the lock extending member (38).

13. A device according to claim 12, characterised in that the protective sleeve is of a plastics material.

14. A device according to any of claims 7 to 13, characterised in that the lock extending member (38) comprises a wound wire cable.

15. A device according to claim 14, characterised in that the cable (38) is of iron or steel.

16. A device according to any preceding claim, characterised in that the device (10) further comprises attachment means (60) for use in attaching the device (10) to a member (58) when not in use.

17. A device according to claim 16, characterised in that the attachment means (60) comprises a strap (62) for placement around the device (10) or part of the device (10) and around the said member (58).

18. A device according to claim 16 or 17, characterised in that the attachment means (60) comprises a spacer member (60) which, in use, is located between the device (10) and the said member to maintain a spaced apart relationship therebetween.
